# DEMANDE DE BREVET EUROPEEN

(11) **EP 1 427 092 A1**
(43) Date de publication de la demande: **09.06.2004**
(21) Numéro de dépôt: 03292940.8
(22) Date de dépôt: 26.11.2003
(51) Int. Cl.: H02M 3/158, H02M 3/157

(54) **Procédé de commande d'une alimentation à découpage à un seul élément inductif et plusieurs sorties, et alimentation correspondante, en particulier pour un téléphone mobile cellulaire**

(30) Priorité: 05.12.2002 FR 0215369
(71) Demandeur: STMicroelectronics S.A., 92120 Montrouge (FR)
(72) Inventeur: Premont, Christophe, 38360 Sassenage (FR); Tallaron, Louis, 38120 saint-Egreve (FR); Trochut, Séverin, 73200 Gilly sur Isère (FR)
(74) Mandataire: Casalonga, Axel

(57) **Abrégé**

L'alimentation à découpage comprend une cellule de commutation CCM commandable cycliquement et comportant un seul élément inductif L et plusieurs sorties individuellement sélectionnables. Au cours de chaque cycle de conduction, on injecte dans l'élément inductif L une énergie totale correspondant à la somme des énergies élémentaires respectivement requises par toutes les sorties OUTi au cours de ce cycle, on sélectionne successivement et dans un ordre prédéterminé identique pour tous les cycles, les sorties requérant une énergie élémentaire non nulle et on restitue sur chaque sortie sélectionnée, l'énergie élémentaire correspondante.

## Description

L'invention concerne les alimentations à découpage et plus particulièrement celles comportant un seul élément inductif et plusieurs sorties régulées.

L'invention s'applique avantageusement, mais non limitativement, aux systèmes portatifs alimentés par batterie, notamment mais non exclusivement les terminaux distants de système de communication sans fil, par exemple les téléphones mobiles cellulaires.

Les systèmes intégrés pour la gestion de l'énergie des applications portables (fonctionnement sur batterie) requièrent de plus en plus de tensions de sortie différentes à réguler.

La solution traditionnelle consiste à créer une tension régulée à partir de la tension d'alimentation avec un régulateur linéaire. Ce régulateur utilise un condensateur externe pour assurer sa fonction. Et on utilise autant de régulateurs linéaires que de sorties à réguler. Le principal inconvénient de ce type de régulateur est son faible rendement.

Pour pallier à ce problème de faible rendement, on utilise des alimentations à découpage, également appelées « convertisseurs DC-DC ». Les rendements sont alors proches de 85 à 90%, alors que dans les mêmes conditions, un régulateur linéaire aurait un rendement de seulement 50%.

Cependant, le principal inconvénient d'une alimentation à découpage est d'utiliser outre un condensateur externe, un élément inductif externe.

Pour réguler plusieurs sorties, il est envisageable d'utiliser plusieurs alimentations à découpage. Mais, ceci suppose alors de mettre en oeuvre autant d'éléments inductifs externes, avec comme principal inconvénient le coût d'un tel élément inductif, et la surface importante de son empreinte sur le circuit imprimé.

Aussi, a-t-il été envisagé d'utiliser des alimentations à découpage capables de réguler plusieurs sorties distinctes avec un seul élément inductif.

Les principales solutions existantes en la matière reposent alors sur un multiplexage temporel de l'énergie délivrée sur les différentes sorties. En d'autres termes, on alimente respectivement les différentes sorties à réguler, au cours de cycles de conduction successifs.

Cependant, de telles solutions présentent de nombreux inconvénients.

L'un d'entre eux réside dans la mise en oeuvre d'une régulation de type « conduction discontinue » sur les différentes sorties. Et, ce type de conduction conduit à des courants pics importants dans l'élément inductif, provoquant alors une chute de rendement significative (65 à 70% au lieu de 85-90%).

Par ailleurs, pour supporter des courants pics plus forts, le courant de saturation de l'élément inductif doit être plus élevé. Ceci a pour conséquence l'utilisation d'un élément inductif de volume plus important, ce qui, pour des applications portables, est une contrainte importante.

En outre, ce type de conduction conduit à une ondulation importante des tensions de sortie régulées.

Un autre inconvénient réside dans la mise en oeuvre de fonctions numériques complexes et importantes en termes de surface. Ces fonctions permettent la gestion de l'énergie sur les différentes sorties selon les algorithmes donnés.

Un autre inconvénient réside dans le fait que la conduction est dans la plupart des solutions existantes de type « modulation de fréquence » (Pulse Frequency Modulation). Or, ce principe provoque une pollution spectrale importante et non contrôlable. Et, si dans certaines applications, telles que des applications d'alimentation de micro-ordinateur ou d'écrans à cristaux liquides, une telle pollution n'est pas critique, cette pollution est inacceptable dans d'autres applications portables, telles que les téléphones mobiles cellulaires, et interdit l'utilisation d'alimentation à découpage utilisant la modulation de fréquence.

L'invention vise à apporter une solution à ces problèmes.

L'invention a pour but de réguler différentes sorties indépendantes en termes de niveaux d'énergie, en utilisant un seul élément inductif et une conduction de type continu sur les différentes sorties. En effet, une conduction de type continu sur les différentes sorties permet de réduire les courants pics dans l'élément inductif. Le courant de saturation de l'élément inductif utilisé peut être ainsi plus petit, et donc l'élément inductif utilisé est par conséquent de volume plus faible.

L'invention a également pour but de proposer une conduction de type « modulation de largeur d'impulsion » (PWM : « Pulse Width Modulation ») sur les différentes sorties régulées. Ceci permet de parfaitement maîtriser le spectre fréquentiel des différentes sorties et de rendre une telle alimentation à découpage parfaitement compatible avec une application de téléphone mobile cellulaire, par exemple.

L'invention propose donc un procédé de commande d'une alimentation à découpage comprenant une cellule de commutation commandable cycliquement et comportant un seul élément inductif et plusieurs sorties individuellement sélectionnables.

Selon une caractéristique générale de l'invention, au cours de chaque cycle de conduction, on injecte dans l'élément inductif une énergie totale correspondant à la somme des énergies élémentaires respectivement requises par toutes les sorties au cours de ce cycles ; on sélectionne successivement et dans un ordre prédéterminé identique pour tous les cycles, les sorties requérant un énergie élémentaire non nulle et on restitue sur chaque sortie sélectionnée, l'énergie élémentaire correspondante.

Ainsi, selon l'invention, dans le même cycle de conduction, on conduit successivement sur des sorties différentes, si bien sûr plus d'une sortie requiert de l'énergie. Par ailleurs, dans chaque cycle de conduction, on va « scruter » chacune des sorties pour déterminer celle qui requiert de l'énergie. Et, le fait de prévoir un ordre prédéterminé et identique pour tous les cycles en ce qui concerne la sélection des sorties à servir en énergie, et par conséquent leur conduction, garantit une conduction de type continu, c'est-à-dire une continuité du courant dans l'élément inductif d'un cycle à l'autre.

En outre, alors que dans les dispositifs de l'art antérieur prévoyant un multiplexage temporel, la fréquence apparente de chaque sortie était égale à la fréquence de commutation divisée par le nombre de sorties, chaque sortie de l'alimentation à découpage selon l'invention présente une fréquence apparente égale à la fréquence de commutation.

Par ailleurs, selon un mode de mise en oeuvre de l'invention, la cellule de commutation de l'alimentation à découpage est avantageusement commandée par une modulation de largeur d'impulsion.

Selon un mode de mise en oeuvre de l'invention, la cellule de commutation comporte, pour chaque sortie, un condensateur possédant une borne, d'une part électriquement connectée à ladite sortie, que celle-ci soit ou non sélectionnée, et d'autre part, électriquement connectée à l'élément inductif lorsque ladite sortie est sélectionnée.

Et, la détermination de l'énergie totale comporte pour chaque sortie une détermination d'un signal d'erreur élémentaire, résultant de la comparaison entre la tension sur ladite borne du condensateur et une tension de référence élémentaire correspondant à la tension de sortie désirée sur ladite sortie, ainsi qu'une sommation de tous les signaux d'erreurs élémentaires, de façon à obtenir un signal de sommation.

Le condensateur, associé à chaque sortie, joue ainsi le rôle de réservoir d'énergie pour continuer à alimenter la sortie non sélectionnée et maintenir la tension sur ladite sortie, jusqu'à ce que celle-ci soit à son tour sélectionnée.

Selon un mode de mise en oeuvre de l'invention, l'injection de l'énergie totale dans l'élément inductif et sa restitution sont commandées au cours de chaque cycle de conduction par un signal impulsionnel principal, résultant de la comparaison entre le signal de sommation et un signal de rampe réinitialisé au début de chaque cycle de conduction.

Par ailleurs, la sélection d'une sortie est effectuée au cours dudit cycle de conduction par un signal impulsionnel élémentaire résultant de la comparaison entre le signal de rampe et un signal auxiliaire obtenu à partir de l'un au moins des signaux d'erreurs élémentaires.

La nature du signal auxiliaire dépend en particulier du nombre de sorties de l'alimentation.

Ainsi, lorsque le nombre de sorties est égal à deux, la sélection d'une sortie comporte une mémorisation au début du cycle de conduction des résultats des comparaisons entre chaque signal d'erreur élémentaire et le signal de rampe, et le signal auxiliaire est alors l'un des signaux d'erreur élémentaires.

Lorsque le nombre nb de sorties de l'alimentation à découpage est supérieur à deux, la sélection d'une sortie comporte nb-2 sommations partielles prédéterminées de signaux d'erreurs élémentaires. Cette sélection comporte également une mémorisation au début de cycle de conduction des résultats des comparaisons entre chaque signal d'erreur élémentaire et de signal de rampe, ainsi qu'une mémorisation des résultats des comparaisons entre chaque signal de sommation partielle et le signal de rampe.

Le signal auxiliaire est alors l'un des signaux d'erreur élémentaires ou bien l'un des signaux de sommation partielle.

L'alimentation à découpage peut être du type « abaisseur de tension », ou bien du type « élévateur de tension », ou encore du type « abaisseur-élévateur de tension ».

Dans une application avantageuse de l'invention, l'alimentation à découpage peut être incorporée dans un terminal d'un système de communication sans fil, par exemple un téléphone mobile cellulaire comportant une batterie et un circuit intégré incorporant un processeur.

L'alimentation à découpage est alors par exemple alimentée par la batterie du terminal et on régule alors par exemple la tension des entrées/sorties du circuit intégré avec la tension disponible sur une sortie de l'alimentation à découpage, tandis qu'on régule la tension d'alimentation du processeur avec la tension disponible sur une autre sortie de l'alimentation à découpage.

L'invention propose également une alimentation à découpage, comprenant une cellule de commutation commandable cycliquement par une boucle d'asservissement, et comportant un seul élément inductif et plusieurs sorties individuellement sélectionnables.

Selon une caractéristique générale de l'invention, la boucle d'asservissement comporte
des moyens de détermination aptes, au cours de chaque cycle de conduction, à déterminer une énergie totale correspondant à la somme des énergies élémentaires respectivement requises par toutes les sorties au cours de ce cycle, et
des moyens de commande aptes au cours de ce cycle, à commander la cellule de commutation de façon à injecter dans l'élément inductif ladite énergie totale, à sélectionner successivement et dans un ordre prédéterminé identique pour tous les cycles, les sorties requérant une énergie élémentaire non nulle et à restituer sur chaque sortie sélectionnée, l'énergie élémentaire correspondante.

Selon un mode de réalisation de l'invention, les moyens de commande comportent un pré-étage apte à délivrer des signaux impulsionnels de largeur modulée, et un étage numérique de commande, par exemple une logique de commande formant une machine d'états, recevant les signaux impulsionnels et élaborant des signaux de commande pour la cellule de commutation.

Selon un mode de réalisation de l'invention, la cellule de commutation comporte
- des moyens de sélection commandables possédant une borne d'entrée connectée à l'élément inductif et plusieurs bornes de sorties respectivement connectées sur les sorties de la cellule de commutation, et
- associé à chaque sortie, un condensateur possédant une borne connectée à la borne de sortie correspondante des moyens de sélection.

Les moyens de détermination de l'énergie totale comportent
pour chaque sortie un moyen élémentaire d'amplification possédant une première entrée reliée à ladite borne du condensateur correspondant, et une deuxième entrée recevant et une tension de référence élémentaire correspondant à la tension de sortie désirée sur ladite sortie, et une sortie délivrant un signal d'erreur élémentaire, et
un moyen de sommation dont les entrées sont respectivement connectées aux sorties des moyens élémentaires d'amplification.

Selon un mode de réalisation dans lequel le nombre de sorties est égal à deux, les moyens de commande comportent un générateur de rampe apte à délivrer au cours de chaque cycle de conduction un signal de rampe réinitialisé au début de chaque cycle, et le pré-étage comporte
- un comparateur principal possédant une première entrée connectée à la sortie du moyen de sommation et une deuxième entrée connectée à la sortie du générateur de rampe, et une sortie délivrant un signal de commande impulsionnel principal, et,
- un comparateur élémentaire associé à chaque sortie de la cellule de commutation et possédant une première entrée connectée à la sortie du moyen élémentaire d'amplification correspondant et une deuxième entrée connectée à la sortie du générateur de rampe, et une sortie délivrant un signal de commande impulsionnel élémentaire.

L'étage numérique de commande
commande l'injection de l'énergie totale dans l'élément inductif et sa restitution au cours de chaque cycle de conduction à partir du signal de commande impulsionnel principal, et
commande les moyens de sélection au cours de ce cycle de conduction à partir de l'un des signaux de commande impulsionnel élémentaires.

L'étage de commande comporte par ailleurs avantageusement des moyens de mémorisation aptes à mémoriser en début de cycle de conduction les valeurs des signaux de commande impulsionnels élémentaires.

Selon un mode de réalisation de l'invention dans lequel le nombre nb des sorties est supérieur à deux, les moyens de commande comportent un générateur de rampe apte à délivrer au cours de chaque cycle de conduction un signal de rampe réinitialisé au début de chaque cycle, et le pré-étage comporte
- un comparateur principal possédant une première entrée connectée à la sortie du moyen de sommation et une deuxième entrée connectée à la sortie du générateur de rampe, et une sortie délivrant un signal de commande impulsionnel principal,
- un comparateur élémentaire associé à chaque sortie de la cellule de commutation, et possédant une première entrée connectée à la sortie du moyen élémentaire d'amplification correspondant et une deuxième entrée connectée à la sortie du générateur de rampe, et une sortie délivrant un signal de commande impulsionnel élémentaire,
- nb-2 moyens de sommation supplémentaires aptes à effectuer nb-2 sommations partielles prédéterminées de signaux d'erreur élémentaires délivrés par les moyens élémentaires d'amplification, et
- nb-2 comparateurs supplémentaires reliés en entrée aux sorties des nb-2 moyens de sommation supplémentaires ainsi qu'à la sortie du générateur de rampe, et délivrant respectivement des signaux de commande impulsionnels supplémentaires.

L'étage numérique de commande
commande l'injection de l'énergie totale dans l'élément inductif et sa restitution au cours de chaque cycle de conduction à partir du signal de commande impulsionnel principal, et
commande les moyens de sélection au cours de ce cycle de conduction à partir de l'un des signaux de commande impulsionnel élémentaires ou de l'un des signaux de commande impulsionnels supplémentaires.

Dans ce mode de réalisation, l'étage de commande comporte avantageusement des moyens de mémorisation aptes à mémoriser en début du cycle de conduction les valeurs des signaux de commande impulsionnels élémentaires et les valeurs des signaux de commande impulsionnels supplémentaires.

Selon un mode de réalisation de l'invention, compatible avec l'un ou l'autre des modes de réalisation qui viennent d'être évoqués, la cellule de commutation comporte deux interrupteurs connectés entre une tension d'alimentation, la masse et l'élément inductif, et commandés par le signal de commande impulsionnel principal. Et les moyens de sélection comportent pour chaque sortie un interrupteur élémentaire, par exemple un transistor MOS, connecté entre l'élément inductif et la borne du condensateur correspondant, et commandé par un signal de commande impulsionnel élémentaire ou par un signal de commande impulsionnel supplémentaire.

L'invention a également pour objet un terminal d'un système de communication sans fil, incorporant une alimentation à découpage, telle que définie ci-avant.

Ce terminal peut former un téléphone mobile cellulaire.

Lorsque le terminal comporte une batterie à un circuit intégré incorporant un processeur, l'alimentation à découpage est alimentée par la batterie du terminal et la tension de régulation des entrées/sorties du circuit intégré peut être la tension disponible sur une sortie de l'alimentation à découpage, tandis que la tension d'alimentation régulée du processeur peut être la tension disponible sur une autre sortie de l'alimentation à découpage.

D'autres avantages et caractéristiques de l'invention apparaîtront à l'examen de la description détaillée de modes de réalisation et de mise en oeuvre, nullement limitatifs, et des dessins annexés, sur lesquels :
- la figure 1 illustre très schématiquement un téléphone mobile cellulaire selon l'invention, incorporant un alimentation à découpage selon l'invention ;
- la figure 2 illustre plus en détail mais toujours schématiquement, une cellule de commutation d'une alimentation à découpage selon l'invention ;
- la figure 3 illustre plus en détail mais toujours schématiquement, un premier mode de réalisation d'une alimentation à découpage selon l'invention, comportant deux sorties ;
- les figures 4, 5 et 6 illustrent plus particulièrement un mode de mise en oeuvre du procédé de commande d'une alimentation à découpage selon l'invention ;
- la figure 7 illustre schématiquement un deuxième mode de réalisation d'une alimentation à découpage selon l'invention, comportant trois sorties ;
- la figure 8 illustre partiellement un autre mode de mise en oeuvre d'un procédé de commande selon l'invention, plus particulièrement applicable à une alimentation à découpage à trois sorties ; et
- la figure 9 illustre schématiquement un autre mode de réalisation d'une cellule de commutation d'une alimentation à découpage selon l'invention.

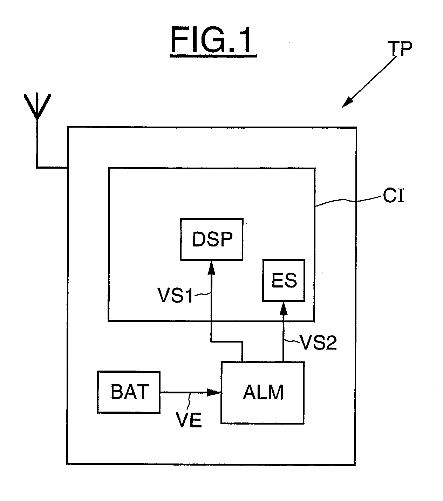

Sur la figure 1, la référence TP désigne globalement un terminal distant d'un système de communication sans fil, par exemple un téléphone mobile cellulaire. Ce téléphone mobile comporte un circuit intégré CI, possédant un processeur DSP ainsi que des entrées/sorties ES.

Le processeur DSP est alimenté par une tension régulée VS1, délivrée par une première sortie d'une alimentation à découpage ALM. A titre indicatif, la tension VSI est une tension régulée qui peut être modulée en fonction de l'utilisation et varier entre 0,8 Volt et 1,3 Volt, par exemple.

Par ailleurs, les entrées/sorties ES du circuit intégré sont alimentées par une deuxième tension régulée VS2, délivrée au niveau d'une deuxième sortie de l'alimentation à découpage ALM. A titre indicatif, cette tension régulée VS2 est égale à 2,1 Volt, par exemple.

Par ailleurs, l'alimentation à découpage ALM est alimentée par une tension d'alimentation VE délivrée par une batterie. A titre d'exemple, cette tension VE peut varier, en fonction de l'état de la batterie, entre 2,5 Volts et 5,5 Volts.

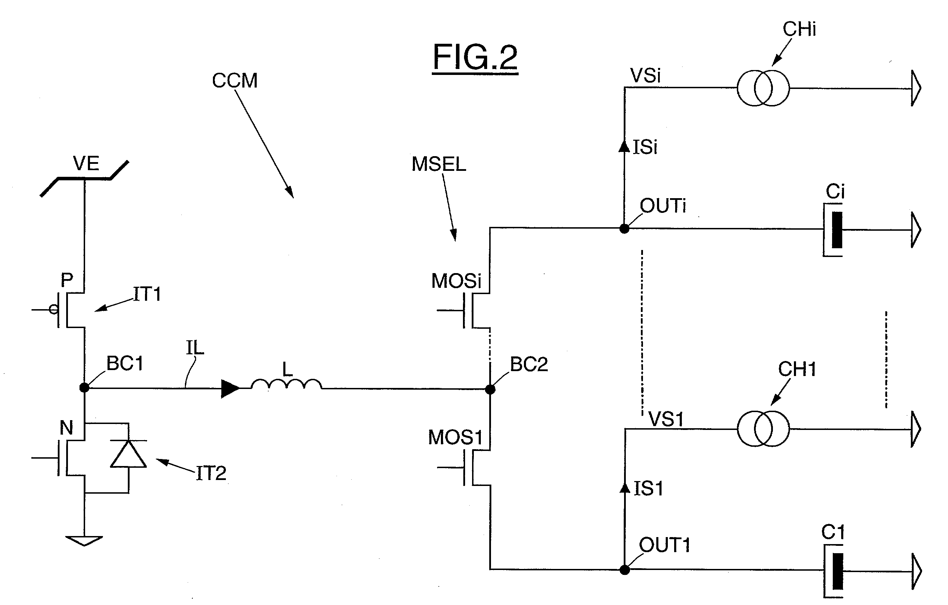

On va maintenant se référer plus particulièrement aux figures 2 à 8, pour illustrer plusieurs modes de réalisation d'une alimentation à découpage ALM selon l'invention, ainsi que ses procédés de commande correspondants.

Dans ces exemples, l'alimentation à découpage ALM est une alimentation du type abaisseur de tension, en ce sens que la tension régulée délivrée sur chacune des sorties de l'alimentation est égale au produit de la tension d'alimentation VE par un coefficient α inférieur à 1. Ce coefficient α est le rapport cyclique de l'alimentation à découpage.

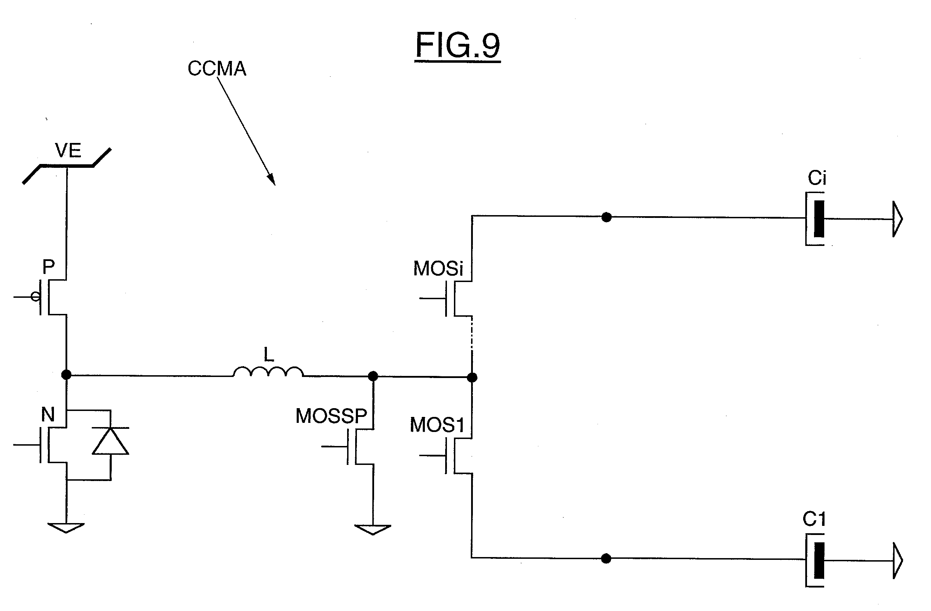

Ceci étant, l'invention n'est pas limitée à l'utilisation d'une alimentation à découpage du type « abaisseur de tension », mais pourrait s'appliquer également à une alimentation du type « élévateur de tension », telle que celle illustrée sur la figure 9, et sur laquelle on reviendra plus en détail ci-après.

L'alimentation à découpage comporte une cellule de commutation CCM formée de deux interrupteurs IT1 et IT2, respectivement constitués dans cet exemple d'un transistor à effet de champ à canal P (transistor PMOS) alimenté par la tension d'alimentation VE, et par un transistor à effet de champ à grille isolée à canal N (transistor NMOS) relié à la masse. La cellule de commutation CCM comporte ici également un seul élément inductif L connecté entre la borne commune BC1 des deux interrupteurs IT1 et IT2, et une autre borne BC2.

La cellule de commutation CCM comporte également plusieurs sorties OUT1-OUTi, qui forment également les sorties de l'alimentation à découpage.

Chaque sortie OUTi est associée à un condensateur Ci, connecté entre cette sortie et la masse.

Par ailleurs, chaque sortie OUTi est connectée à la borne BC2 par l'intermédiaire d'un interrupteur élémentaire, ici formé d'un transistor de sélection MOSi, qui peut être un transistor à canal N ou à canal P. L'ensemble des interrupteurs élémentaires MOS1-MOSi forme des moyens de sélection MSEL, qui vont permettre de sélectionner individuellement l'une des sorties de l'alimentation à découpage.

Enfin, on a représenté sur la figure 2, pour chaque sortie, une charge CHi alimentée par la tension régulée VSi délivrée par la sortie correspondante. Par ailleurs, un courant ISi circule dans cette charge CHi.

Ainsi, dans l'exemple de l'application du téléphone mobile cellulaire évoqué ci-avant, la charge CH1 peut être par exemple le processeur DSP, tandis que la charge CH2 sera constituée des entrées/sorties ES du circuit intégré.

Comme on le verra plus en détail ci-après, les interrupteurs IT1 et IT2 sont successivement et alternativement fermés et ouverts, de façon à permettre un stockage d'énergie dans l'élément inductif, puis une restitution de cette énergie. La durée pendant laquelle les interrupteurs sont ouverts et fermés au cours de chaque cycle de conduction, dépend du rapport cyclique α.

Selon l'invention, comme on le verra plus en détail ci-après, l'énergie stockée dans l'élément inductif correspond à l'énergie totale requise par chacune des sorties OUTi de l'alimentation.

L'alimentation à découpage ALM comporte également une boucle d'asservissement BAS, permettant de contrôler la cellule de commutation pour obtenir la tension de sortie désirée sur chacune des sorties.

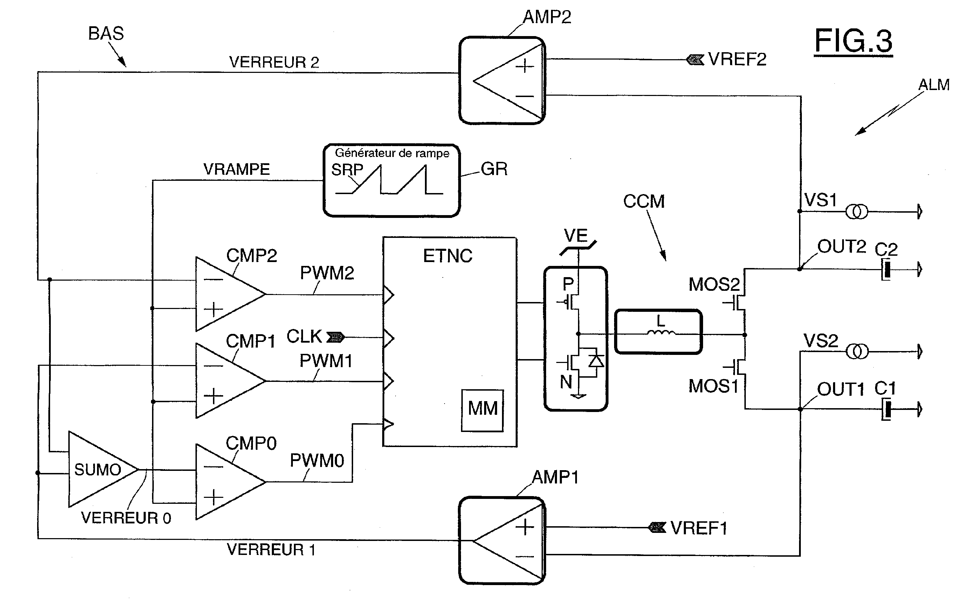

Dans l'exemple illustré sur la figure 3, on a représenté une cellule de commutation à deux sorties.

Chacune des tensions de sortie désirées VS1 et VS2 est une tension régulée dont la valeur est fixée par la valeur d'une tension externe de référence VREF1 et VREF2, respectivement. Ce sont ces tensions de référence VREF1 et VREF2 qui ont par exemple, dans l'application du téléphone mobile cellulaire évoquée, en ce qui concerne la tension VREF1, des valeurs qui peuvent être modulées en fonction de l'utilisation entre 0,8 et 1,3 Volt, et en ce qui concerne la tension VREF2, la valeur de 2,1 Volts.

La boucle d'asservissement comporte un premier moyen d'amplification élémentaire AMP1, dont l'entrée positive reçoit la tension VREF1, et dont l'entrée négative est connectée à la première borne de sortie OUT1. La différence entre la tension externe de référence VREF1 et la tension de sortie VS1, est par conséquent amplifiée dans l'amplificateur d'erreur AMP1, et la tension d'erreur correspondante VERREUR1 est une image de l'énergie élémentaire requise sur la sortie OUT1.

La boucle d'asservissement comporte de même un deuxième amplificateur d'erreur élémentaire AMP2 recevant, d'une part, la tension de référence VREF2 et, d'autre part, la tension VS2. Cet amplificateur AMP2 délivre une tension d'erreur VERREUR2, qui est également représentative de l'énergie élémentaire requise sur la sortie OUT2.

La boucle d'asservissement BAS comporte, par ailleurs, un moyen de sommation SUM0, dont les deux entrées sont respectivement reliées aux deux sorties des amplificateurs d'erreur élémentaires AMP1 et AMP2. La sortie du moyen d'amplification SUM0 délivre par conséquent une tension VERREUR0 qui est représentative de l'énergie totale correspondant à la somme des énergies élémentaires respectivement requises par toutes les sorties au cours de chaque cycle de conduction.

La boucle d'asservissement BAS comporte également un pré-étage de commande formé ici de plusieurs comparateurs CMP0, CMP1 et CMP2.

Plus précisément, le comparateur CMP0, dénommé ici comparateur principal, reçoit sur son entrée négative la tension d'erreur VERREUR0, et sur son entrée positive, une tension VRAMPE correspondant à un signal de rampe SRP généré de façon classique par un générateur de rampe GR de structure connue en soi.

La sortie du comparateur principal CMP0 délivre par conséquent un signal de commande impulsionnel principale PWM0.

Par ailleurs, le comparateur CMP1 est un comparateur dit « élémentaire », qui est associé à la sortie OUT1. Ce comparateur CMP1 reçoit sur son entrée négative la tension VERREUR1 et sur son entrée positive la tension VRAMPE. Il délivre un signal de commande impulsionnel élémentaire PWM1.

De même, le comparateur CMP2 est un comparateur dit « élémentaire », associé à la sortie OUT2, qui délivre, après avoir reçu sur ses deux entrées la tension d'erreur VERREUR2 et la tension VRAMPE, un signal de commande impulsionnel élémentaire PWM2.

Les signaux PWM0, PWM1 et PWM2 sont par conséquent des signaux impulsionnels dont les impulsions sont de largeur modulée par le niveau de la tension d'erreur.

Les moyens de commande de la boucle d'asservissement BAS comportent par ailleurs un étage numérique de commande ETNC, recevant les signaux PWM0, PWM1, PWM2, ainsi qu'un signal d'horloge CLK, qui est par ailleurs utilisé pour réinitialiser le générateur de rampe au début de chaque cycle de conduction (cette opération est effectuée sur le front montant de l'horloge CLK, par exemple).

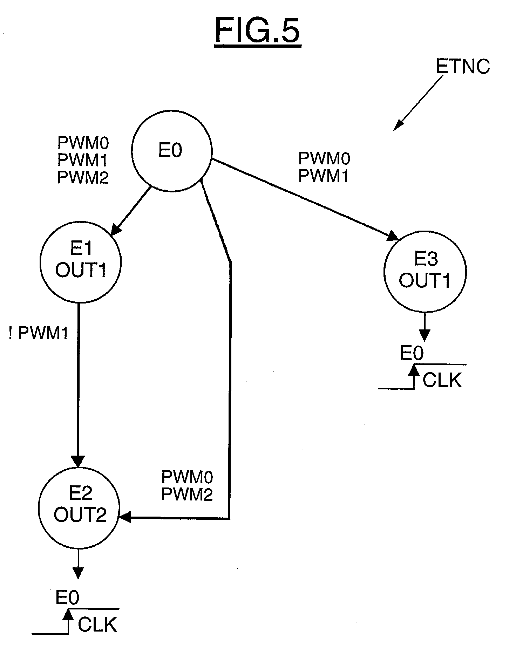

L'étage de commande ETNC, qui s'apparente à une machine d'états dont le diagramme est illustré sur la figure 5, va élaborer à partir des signaux PWM0, PWM1 et PWM2, des signaux de commande destinés à commander, d'une part, les interrupteurs IT1 et IT2 de la cellule de commutation CCM, et, d'autre part, les moyens de sélection, c'est-à-dire les transistors MOS1 et MOS2.

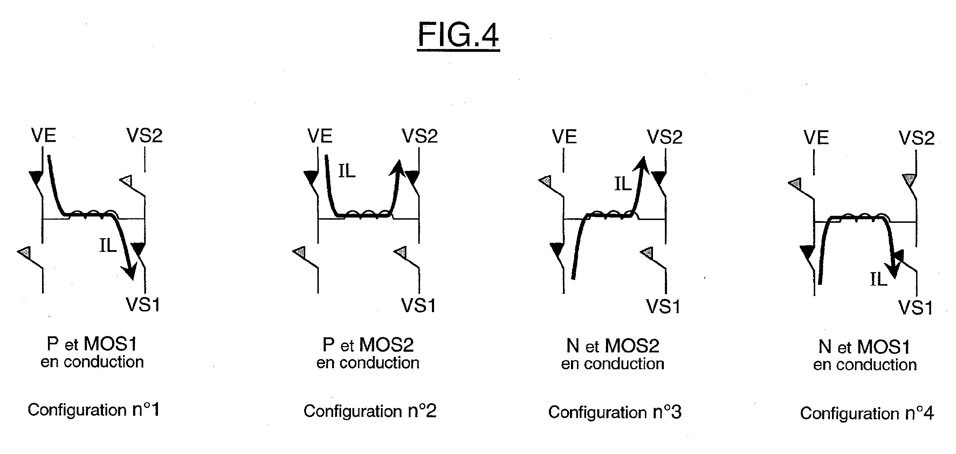

D'une façon générale, comme illustré sur la figure 4, il existe, pour l'alimentation à découpage à deux sorties, quatre configurations possibles différentes pour les interrupteurs IT1 et IT2, ainsi que pour les transistors MOSi des moyens de sélection.

Sur ces figures, la référence IL désigne le courant circulant dans l'élément inductif L.

Dans la configuration n°1, l'interrupteur IT1 (transistor PMOS) et le transistor MOS1 sont en conduction. La sortie OUT1 est par conséquent sélectionnée.

Dans la configuration n°2, c'est la sortie OUT2 qui est sélectionnée avec l'interrupteur IT1 et le transistor MOS2 en conduction.

La sortie OUT2 peut également être sélectionnée avec la configuration n°3, dans laquelle ce sont cette fois-ci les interrupteurs IT2 (transistor NMOS) et le transistor MOS2 qui sont en conduction.

Enfin, la sortie OUT1 peut également être sélectionnée avec la configuration n°4, dans laquelle l'interrupteur IT2 et le transistor MOS1 sont en conduction.

Sur la figure 5, la machine d'états ETNC comporte quatre états E0, E1, E2 et E3. Matériellement, les moyens ETNC sont formés par exemple de portes logiques aisément réalisables par l'homme du métier connaissant le diagramme d'états.

L'état E0 est un état initial dans lequel on revient à chaque front montant du signal d'horloge CLK, c'est-à-dire au début de chaque cycle de conduction.

Par ailleurs, dans cet état E0, on mémorise dans un moyen de mémoire MM, au début de chaque cycle de conduction, les valeurs des signaux PWM0, PWM1 et PWM2. Ces valeurs permettent de déterminer si chaque sortie requiert ou non de l'énergie.

Ainsi, un signal PWM sera dit « actif » lorsqu'une sortie requiert de l'énergie et inactif dans le cas contraire. En outre, par convention, sur le diagramme de la figure 5, un signal PWM est considéré comme actif lorsqu'il n'est pas précédé du symbole !, tandis qu'un signal PWM est inactif lorsqu'il est précédé du symbole !.

D'une façon générale, selon l'invention, on va scruter et sélectionner successivement dans un ordre prédéterminé, qui est le même pour tous les cycles, les différentes sorties qui requièrent de l'énergie. Ceci permet d'assurer la continuité de courant dans l'élément inductif L entre la fin d'un cycle de conduction et le début du cycle de conduction suivant.

Dans l'exemple décrit ici, on suppose que l'ordre de sélection et de scrutation des sorties est l'ordre 1 ; 2.

Si, dans l'état E0, les signaux PWM0, PWM1 et PWM2 sont actifs, ce qui signifie que chacune des sorties OUT1 et OUT2 requiert de l'énergie, on va alors se placer dans l'état E1, dans lequel la sortie OUT1 est sélectionnée en premier. Cette sélection va s'opérer à l'aide du signal PWM1 qui va commander l'interrupteur MOS1. On rappelle ici que le signal PWM0 va permettre de commander l'injection et la restitution de l'énergie totale dans l'élément inductif L.

Lorsque le signal PWM1 devient inactif, c'est-à-dire que la sortie OUT1 a reçu toute l'énergie qu'elle requérait, alors on passe dans l'état E2, dans lequel la sortie OUT2 est sélectionnée. Et, cette sélection s'effectue ici par le signal PWM1 qui, lors de son passage de l'état actif à l'état inactif, va rendre passant le transistor MOS2.

Dans l'hypothèse où dans l'état E0, seule la sortie OUT1 requiert de l'énergie, c'est-à-dire dans l'hypothèse où les signaux PWM0 et PWM1 sont actifs, on passe alors dans l'état E3. Dans cet état, la sortie OUT1 est sélectionnée à l'aide du signal PWM1.

Dans le cas où seule la sortie OUT2 requiert de l'énergie (signaux PWM0 et PWM2 actifs), on passe alors directement dans l'état E2. Cependant, cette fois-ci, la sélection de la sortie OUT2 s'effectue à l'aide du signal PWM2.

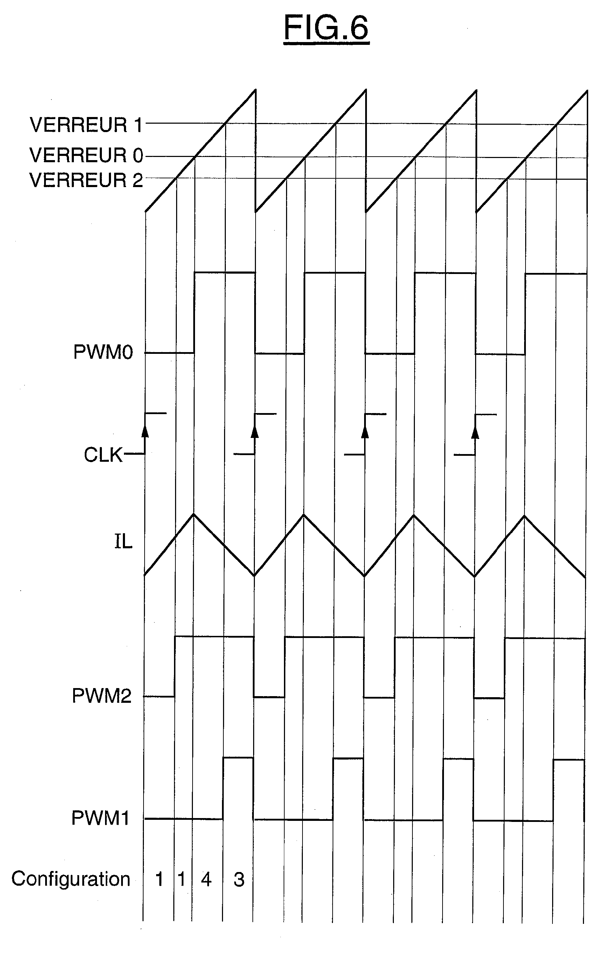

On va maintenant illustrer un exemple plus précis de fonctionnement de l'alimentation ALM en se référant plus particulièrement à la figure 6.

Sur la partie haute de la figure 6, on a représenté la tension VRAMPE ainsi que les tensions VERREUR0, VERREUR1 et VERREUR2.

Par ailleurs, dans cet exemple, les signaux PWM1 et PWM2 sont considérés comme actifs à l'état bas et inactifs à l'état haut. De même, lorsque le signal PWM0 est à l'état bas, c'est l'interrupteur IT1 qui est fermé (transistor PMOS passant), tandis que lorsque le signal PWM0 est à l'état haut, c'est l'interrupteur IT2 qui est fermé (transistor NMOS passant).

Dans l'exemple qui est décrit, chacune des deux sorties OUT1 et OUT2 requiert de l'énergie puisqu'au début du cycle de conduction les deux signaux PWM1 et PWM2 sont actifs.

La machine d'états passe donc dans l'état E1. Dans cet état, le transistor PMOS (interrupteur IT1) conduit jusqu'à ce que la tension VRAMPE devienne supérieure à la tension VERREUR0, ce qui provoque alors la montée à « 1 » du signal PWM0 et la mise en conduction du transistor NMOS (interrupteur IT2).

Parallèlement, au début du cycle de conduction, le signal PWM1 est actif et le reste jusqu'à ce que la tension VRAMPE devienne supérieure à la tension VERREUR1. A cet instant, toute l'énergie requise par la sortie OUT1 lui a été délivrée.

Ainsi, comme indiqué sur la partie basse de la figure 6, les différents interrupteurs de la cellule de commutation ont successivement adopté les configurations 1 et 4 de la figure 4. Au cours de ces configurations, le transistor MOS1 a été rendu passant par le signal PWM1.

Puis, lorsque toute l'énergie élémentaire requise par la sortie OUT1 a été restituée à cette sortie, le signal PWM1 devient inactif, ce qui rend le transistor MOS1 bloqué et rend simultanément le transistor MOS2 passant. En effet, comme indiqué ci-avant, c'est ici le signal PWM1 qui commande également le transistor MOS2, le signal PWM2 n'étant pas utilisé dans ce cas de figure.

A cet instant, le reste de l'énergie emmagasinée dans l'élément inductif L correspond à l'énergie élémentaire qui doit être restituée sur la sortie OUT2.

La fin du cycle de conduction se traduit donc par une configuration des interrupteurs portant le n°3 sur la figure 4.

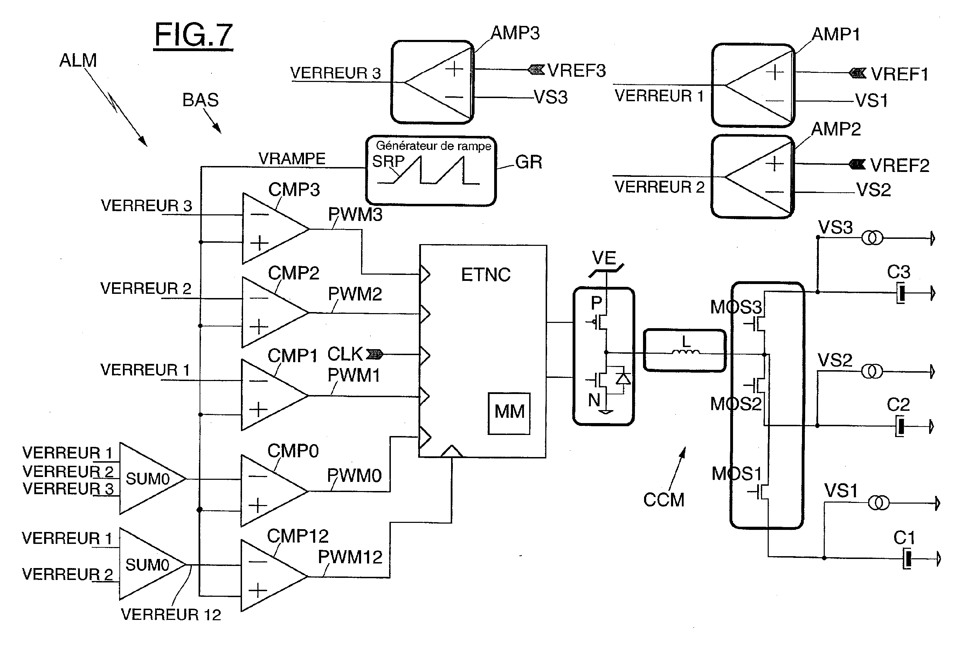

On se réfère maintenant à la figure 7 pour décrire un autre mode de réalisation d'une alimentation à découpage selon l'invention, présentant plus que deux sorties, en l'espèce trois sorties, OUT1-OUT3.

A des fins de simplification, seules les différences entre la figure 7 et la figure 3 seront maintenant décrites.

Par rapport à l'alimentation illustrée sur la figure 3, la boucle d'asservissement BAS de l'alimentation ALM illustrée sur la figure 7 comporte un autre amplificateur d'erreur élémentaire AMP3 associé à la sortie OUT3 et recevant sur ses deux entrées une tension de référence VREF3 ainsi que la tension régulée VS3 délivrée par la sortie OUT3.

Par ailleurs, il est prévu un moyen de sommation supplémentaire SUM12 recevant sur ses deux entrées, respectivement, la tension d'erreur VERREUR1 délivrée par l'amplificateur AMP1, et la tension d'erreur VERREUR2 délivrée par l'amplificateur AMP2. La sortie du sommateur partiel SUM12 délivre une tension d'erreur VERREUR12.

Par ailleurs, le pré-étage de commande comporte un autre comparateur élémentaire CMP3, recevant la tension VERREUR3 ainsi que la tension VRAMPE et délivrant un signal de commande impulsionnel élémentaire PWM3.

Ce pré-étage de commande comporte également un comparateur supplémentaire CMP12 recevant, d'une part, la tension VERREUR12, et, d'autre part, la tension VRAMPE, et délivrant sur sa sortie un signal de commande impulsionnel supplémentaire PWM12.

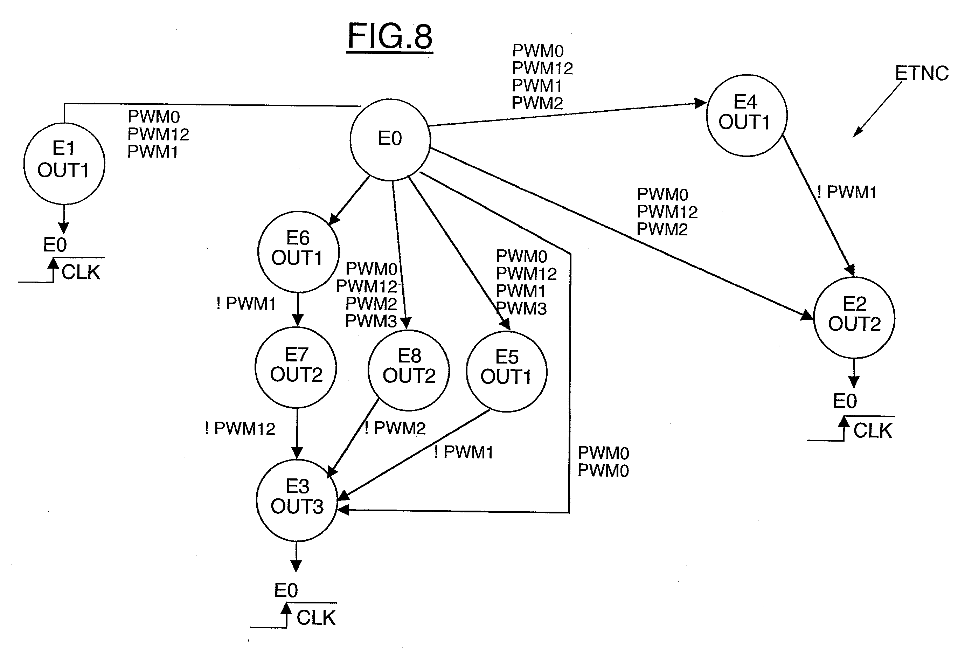

En fait, comme on va le voir maintenant plus en détail en se référant plus particulièrement au diagramme d'état de l'étage de commande ETNC illustré sur la figure 8, les moyens SUM12 et CMP12 permettent de créer une sortie fictive qui représente, au niveau énergétique, la somme des énergies élémentaires requises sur les sorties OUT1 et OUT2. Et, cette sortie fictive va permettre dans une configuration donnée, de se ramener à la gestion d'une alimentation à deux sorties, en l'espèce la sortie OUT3 et la sortie fictive.

Sur la figure 8, que l'on va maintenant décrire, les conventions de notation sont les mêmes que celles adoptées sur la figure 5.

Dans l'état E0, c'est-à-dire au début du cycle de conduction, on mémorise les valeurs des signaux PWM1, PWM2, PWM3, PWM0, ainsi que la valeur du signal supplémentaire PWM12.

On suppose également dans cet exemple, que l'ordre de sélection et de scrutation de sortie est l'ordre 1, 2, 3.

Si, dans l'état E0, on s'aperçoit que l'ensemble des trois sorties requièrent de l'énergie, on passe alors dans l'état E6.

Dans cet état, on sélectionne tout d'abord la sortie OUT1 à l'aide du signal PWM1. Bien entendu, la commande des interrupteurs IT1 et IT2 est toujours réalisée à partir du signal PWM0.

Lorsque la totalité de l'énergie élémentaire requise par la sortie OUT1 lui a été délivrée, le signal PWM1 devient inactif et l'on passe alors dans l'état E7. Dans cet état, la sortie OUT2 est sélectionnée à partir du signal PWM1 devenu inactif et il y a alors restitution d'énergie depuis l'élément inductif L vers cette sortie OUT2.

Et, c'est cette fois-ci le signal PWM12 qui va permettre de définir à quel instant l'énergie élémentaire requise par cette sortie OUT2 a été totalement restituée à cette sortie. En effet, le signal PWM12 est représentatif de la somme des énergies respectivement requises par les sorties OUT1 et OUT2.

Donc, lorsque le signal PWM12 deviendra inactif, cela signifiera que la totalité de l'énergie requise par les sorties OUT1 et OUT2 leur aura été restituée. Puisque l'énergie élémentaire de la sortie OUT1 lui a déjà été restituée, le passage de l'état inactif du signal PWM12 signifiera que la totalité de l'énergie requise par la sortie OUT2 lui aura été restituée.

A cet instant, on passe dans l'état E3 en sélectionnant, à l'aide du signal PWM12, la sortie OUT3. Le reste de l'énergie qui a été stockée dans l'élément inductif L est alors restitué à la sortie OUT3 et correspond effectivement à l'énergie élémentaire requise par cette sortie.

Dans le cas où seules les sorties OUT2 et OUT3 requièrent de l'énergie, on passera alors de l'état E0 à l'état E8, la sélection de la sortie OUT2 s'effectuant à partir du signal PWM2. Puis, lorsque ce signal devient inactif, on passe dans l'état E3, la sélection de la sortie OUT3 s'effectuant également par le signal PWM2 devenu inactif.

La description qui vient d'être effectuée pour le passage entre les états E0, E8 et E3 s'applique également pour le passage entre les états E0, E5 et E3, lorsque seules les sorties OUT1 et OUT3 requièrent de l'énergie.

Par contre, lorsque seule la sortie OUT3 requiert de l'énergie, on passe directement de l'état E0 à l'état E3, la sélection de la sortie OUT3 s'effectuant à l'aide du signal PWM3.

L'explication fournie pour le passage des états E0 à E3 via l'état E5,s'applique également pour le chemin E0-E4-E2, lorsque seules les sorties OUT1 et OUT2 requièrent de l'énergie.

Par contre, lorsque seule la sortie OUT2 requiert de l'énergie, on passe directement de l'état E0 à l'état E2 en sélectionnant la sortie OUT2 avec le signal PWM2.

Enfin, lorsque seule la sortie OUT1 requiert de l'énergie, on passe directement de l'état E0 à l'état E1 en sélectionnant la sortie OUT1 avec le signal PWM1.

Ce qui vient d'être décrit, en référence aux figures 7 et 8 pour trois sorties, peut être généralisé à nb sorties. Dans ce cas, on prévoira simplement nb-2 moyens de sommation supplémentaires, et nb-2 comparateurs supplémentaires. Ces moyens de sommation seront cascadés, de façon à former à chaque fois des sorties fictives dont les énergies seront égales à la somme des énergies élémentaires de deux sorties, fictives ou non.

Dans l'exemple d'application du téléphone mobile évoqué ci-avant, la troisième sortie pourra être utilisée pour alimenter les moyens multimédias du téléphone.

Les transistors MOSi des moyens de sélection de la cellule de commutation peuvent être des transistors à canal N ou à canal P. Leur choix dépendra de l'application et des tensions et de la valeur des tensions de sortie régulée.

Ainsi, à titre d'exemple, dans l'application du téléphone mobile cellulaire, le transistor MOS1 qui alimente le processeur pourra être un transistor NMOS, tandis que le transistor MOS2 qui alimente les entrées/sorties du circuit intégré sera préférentiellement un transistor PMOS.

Comme indiqué ci-avant, l'invention n'est pas limitée à une alimentation à découpage du type « abaisseur de tension ». En effet, ce qui vient d'être décrit s'applique également à une alimentation du type « élévateur de tension », dont un exemple de cellule de commutation CCMA est illustrée sur la figure 9.

Cette cellule CCMA diffère simplement de la cellule CCM par un transistor MOS supplémentaire MOSSP, connecté entre l'élément inductif L et la masse.

L'invention n'est pas limitée aux modes de réalisation qui viennent d'être décrits mais en embrasse toutes les variantes. Ainsi les interrupteurs élémentaires des moyens de sélection MSEL peuvent être formés de tout type de commutateur réalisable en circuit intégré, par exemple des transistors bipolaires ou des transistors IGBT. Il en est de même pour les interrupteurs IT1 et IT2.

## Revendications

1. Procédé de commande d'une alimentation à découpage comprenant une cellule de commutation (CCM) commandable cycliquement et comportant un seul élément inductif (L) et plusieurs sorties individuellement sélectionnables, **caractérisé par le fait qu'**au cours de chaque cycle de conduction, on injecte dans l'élément inductif (L) une énergie totale correspondant à la somme des énergies élémentaires respectivement requises par toutes les sorties (OUTi) au cours de ce cycle, on sélectionne successivement et dans un ordre prédéterminé identique pour tous les cycles, les sorties requérant une énergie élémentaire non nulle et on restitue sur chaque sortie sélectionnée, l'énergie élémentaire correspondante.

2. Procédé selon la revendication 1, **caractérisé par le fait que** la cellule de commutation (CCM) est commandée par une modulation de largeur d'impulsions.

3. Procédé selon la revendication 1 ou 2, **caractérisé par le fait que** la cellule de commutation comporte pour chaque sortie (OUTi) un condensateur (Ci) possédant une borne d'une part électriquement connectée à ladite sortie (OUTi) que celle-ci soit ou non sélectionnée, et d'autre part électriquement connectée à l'élément inductif (L) lorsque ladite sortie est sélectionnée, **par le fait que** la détermination de l'énergie totale comporte pour chaque sortie une détermination d'un signal d'erreur élémentaire (VERREUR) résultant de la comparaison entre la tension sur ladite borne du condensateur et une tension de référence élémentaire correspondant à la tension de sortie désirée sur ladite sortie, et une sommation de tous les signaux d'erreurs élémentaires de façon à obtenir un signal de sommation (VERREUR0).

4. Procédé selon les revendications 2 et 3, **caractérisé par le fait que** l'injection de l'énergie totale dans l'élément inductif et sa restitution est commandée au cours de chaque cycle de conduction par un signal impulsionnel principal (PWM0) résultant de la comparaison entre le signal de sommation et un signal de rampe (SRP) réinitialisé au début de chaque cycle de conduction, et **par le fait que** la sélection d'une sortie est effectuée au cours dudit cycle de conduction par un signal impulsionnel élémentaire (PWM0, PWM1) résultant de la comparaison entre le signal de rampe et un signal auxiliaire obtenu à partir de l'un au moins des signaux d'erreur élémentaires.

5. Procédé selon la revendication 4, **caractérisé par le fait que** le nombre de sorties est égal à deux, **par le fait que** la sélection d'une sortie comporte une mémorisation (MM) en début du cycle de conduction des résultats des comparaisons entre chaque signal d'erreur élémentaire et le signal de rampe, et **par le fait que** ledit signal auxiliaire est l'un des signaux d'erreur élémentaires.

6. Procédé selon la revendication 4, **caractérisé par le fait que** le nombre nb de sorties est supérieur à deux, **par le fait que** la sélection d'une sortie comporte nb-2 sommations partielles prédéterminées des signaux d'erreur élémentaires, et comporte une mémorisation (MM) en début de cycle de conduction, des résultats des comparaisons entre chaque signal d'erreur élémentaire et le signal de rampe et des comparaisons entre chaque signal de sommation partielle et le signal de rampe, et **par le fait que** le signal auxiliaire est l'un des signaux d'erreur élémentaires (PWM1, PWM2, PWM3), ou l'un des signaux de sommation partielle (PWM12).

7. Procédé selon l'une des revendications précédentes, **caractérisé par le fait que** l'alimentation à découpage (ALM) est du type abaisseur de tension.

8. Procédé selon l'une des revendications 1 à 6, **caractérisé par le fait que** l'alimentation à découpage (ALM) est du type élévateur de tension.

9. Procédé selon l'une des revendications 1 à 6, **caractérisé par le fait que** l'alimentation à découpage (ALM) est du type abaisseur-élévateur de tension

10. Procédé selon l'une des revendications précédentes, **caractérisé par le fait que** l'alimentation à découpage est incorporée dans un terminal (TP) d'un système de communication sans fil, par exemple un téléphone mobile cellulaire, comportant une batterie et un circuit intégré (CI) incorporant un processeur (DSP), **par le fait que** l'alimentation à découpage est alimentée par la batterie du terminal, et **par le fait qu'**on régule la tension des entrées/sorties du circuit intégré avec la tension disponible sur une sortie de l'alimentation à découpage, et on régule la tension d'alimentation du processeur avec la tension disponible sur une autre sortie de l'alimentation à découpage.

11. Alimentation à découpage comprenant une cellule de commutation, commandable cycliquement par une boucle d'asservissement, et comportant un seul élément inductif et plusieurs sorties individuellement sélectionnables, **caractérisée par le fait que** la boucle d'asservissement (BAS) comporte des moyens de détermination aptes, au cours de chaque cycle de conduction, à déterminer une énergie totale correspondant à la somme des énergies élémentaires respectivement requises par toutes les sorties au cours de ce cycle, et des moyens de commande (ETNC) aptes au cours de ce cycle, à commander la cellule de commutation de façon à injecter dans l'élément inductif ladite énergie totale, à sélectionner successivement et dans un ordre prédéterminé identique pour tous les cycles, les sorties requérant une énergie élémentaire non nulle et à restituer sur chaque sortie sélectionnée, l'énergie élémentaire correspondante.

12. Alimentation à découpage selon la revendication 11, **caractérisé par le fait que** les moyens de commande comportent un pré-étage (CMP1-CMP12) apte à délivrer des signaux impulsionnels de largeur modulée, et un étage numérique de commande (ETNC) recevant les signaux impulsionnels et élaborant des signaux de commande pour la cellule de commutation.

13. Alimentation à découpage selon la revendication 11 ou 12, **caractérisée par le fait que** la cellule de commutation comporte
des moyens de sélection commandables (MSEL) possédant une borne d'entrée connectée à l'élément inductif et plusieurs bornes de sorties respectivement connectées sur les sorties de la cellule de commutation, et
associé à chaque sortie, un condensateur (Ci) possédant une borne connectée à la borne de sortie correspondante des moyens de sélection,
**par le fait que** les moyens de détermination de l'énergie totale comportent pour chaque sortie un moyen élémentaire d'amplification (AMP1, AMP2) possédant une première entrée à ladite borne du condensateur correspondant, et une deuxième entrée recevant et une tension de référence élémentaire correspondant à la tension de sortie désirée sur ladite sortie, et une sortie délivrant un signal d'erreur élémentaire, et un moyen de sommation (SUM0) dont les entrées sont respectivement connectées aux sorties des moyens élémentaires d'amplification.

14. Alimentation à découpage selon les revendications 12 et 13, **caractérisée par le fait que** le nombre des sorties est égal à deux, **par le fait que** les moyens de commande comportent un générateur de rampe (GR) apte à délivrer au cours de chaque cycle de conduction un signal de rampe réinitialisé au début de chaque cycle, **par le fait que** le pré-étage comporte
- un comparateur principal (CMP0) possédant une première entrée connectée à la sortie du moyen de sommation et une deuxième entrée connectée à la sortie du générateur de rampe, et une sortie délivrant un signal de commande impulsionnel principal, et,
- un comparateur élémentaire (CMP1, CMP2) associé à chaque sortie de la cellule de commutation et possédant une première entrée connectée à la sortie du moyen élémentaire d'amplification correspondant et une deuxième entrée connectée à la sortie du générateur de rampe, et une sortie délivrant un signal de commande impulsionnel élémentaire,
et **par le fait que** l'étage numérique de commande (ETNC) commande l'injection de l'énergie totale dans l'élément inductif et sa restitution au cours de chaque cycle de conduction à partir du signal de commande impulsionnel principal, et commande les moyens de sélection au cours de ce cycle de conduction à partir de l'un des signaux de commande impulsionnel élémentaires.

15. Alimentation à découpage selon la revendication 14, **caractérisée par le fait que** l'étage de commande (ETNC) comporte des moyens de mémorisation (MM) aptes à mémoriser en début du cycle de conduction les valeurs des signaux de commande élémentaires.

16. Alimentation à découpage selon les revendications 12 et 13, **caractérisée par le fait que** le nombre nb des sorties est supérieur à deux, **par le fait que** les moyens de commande comportent un générateur de rampe apte à délivrer au cours de chaque cycle de conduction un signal de rampe réinitialisé au début de chaque cycle, **par le fait que** le pré-étage comporte
- un comparateur principal (CMP0) possédant une première entrée connectée à la sortie du moyen de sommation et une deuxième entrée connectée à la sortie du générateur de rampe, et une sortie délivrant un signal de commande impulsionnel principal,
- un comparateur élémentaire (CMP1, CMP2, CMP3) associé à chaque sortie de la cellule de commutation, et possédant une première entrée connectée à la sortie du moyen élémentaire d'amplification correspondant et une deuxième entrée connectée à la sortie du générateur de rampe, et une sortie délivrant un signal de commande impulsionnel élémentaire,
- nb-2 moyens de sommation supplémentaires (SUM12) aptes à effectuer nb-2 sommations partielles prédéterminées des signaux d'erreur élémentaires délivrés par les moyens élémentaires d'amplification, et
- nb-2 comparateurs supplémentaires (CMP12) reliés en entrée aux sorties des nb-2 moyens de sommation supplémentaires ainsi qu'à la sortie du générateur de rampe, et délivrant respectivement des signaux de commande impulsionnels supplémentaires,
et **par le fait que** l'étage numérique de commande (ETNC) commande l'injection de l'énergie totale dans l'élément inductif et sa restitution au cours de chaque cycle de conduction à partir du signal de commande impulsionnel principal, et commande les moyens de sélection au cours de ce cycle de conduction à partir de l'un des signaux de commande impulsionnel élémentaires ou de l'un des signaux de commande impulsionnels supplémentaires.

17. Alimentation à découpage selon la revendication 16, **caractérisée par le fait que** l'étage de commande comporte des moyens de mémorisation (MM) aptes à mémoriser en début du cycle de conduction les valeurs des signaux de commande impulsionnels élémentaires et les valeurs des signaux de commande impulsionnels supplémentaires.

18. Alimentation à découpage selon l'une des revendications 14 à 17, **caractérisée par le fait que** la cellule de commutation (CCM) comporte deux interrupteurs (IT1, IT2) connectés entre une tension d'alimentation, la masse et l'élément inductif, et commandés par le signal de commande impulsionnel principal, et **par le fait que** les moyens de sélection comportent pour chaque sortie un interrupteur élémentaire (MOSi), connecté entre l'élément inductif et la borne du condensateur correspondant, et commandé par un signal de commande impulsionnel élémentaire ou par un signal de commande impulsionnel supplémentaire.

19. Alimentation à découpage selon l'une des revendications 11 à 18, **caractérisée par le fait qu'**elle est du type abaisseur de tension.

20. Alimentation à découpage selon l'une des revendications 11 à 18, **caractérisée par le fait qu'**elle est du type élévateur de tension.

21. Alimentation à découpage selon l'une des revendications 11 à 18, **caractérisée par le fait qu'**elle est du type abaisseur-élévateur de tension.

22. Terminal d'un système de communication sans fil, **caractérisé par le fait qu'**il incorpore une alimentation à découpage selon l'une des revendications 11 à 21.

23. Terminal selon la revendication 22, **caractérisé par le fait qu'**il forme un téléphone mobile cellulaire.

24. Terminal selon la revendication 22 ou 23, **caractérisé par le fait qu'**il comporte une batterie et un circuit intégré (CI) incorporant un processeur, **par le fait que** l'alimentation à découpage est alimentée par la batterie du terminal, et **par le fait que** la tension de régulation des entrées/sorties du circuit intégré est la tension disponible sur une sortie de l'alimentation à découpage, et la tension d'alimentation régulée du processeur est la tension disponible sur une autre sortie de l'alimentation à découpage.
